# EUROPEAN PATENT APPLICATION

(11) **EP 1 679 327 A1**
(43) Date of publication of application: **12.07.2006**
(21) Application number: 04793058.1
(22) Date of filing: 27.10.2004
(51) Int. Cl.: C08G 18/50, B68G 5/00, C08G 101/00

(54) **FLEXIBLE POLYURETHANE FOAM AND USE THEREOF**

(30) Priority: 28.10.2003 JP 2003367941
(71) Applicant: Mitsui Chemicals Polyurethanes, Inc., Tokyo 105-7117 (JP)
(72) Inventor: MATSUMOTO, Shinsuke Mitsui Chem. Polyurethanes Inc, Chiba 299-0265 (JP); KANNO, Takashi, Mitsui Chem. Polyurethanes Inc., Chiba 299-0265 (JP); SANO, Koichi,c/o Mitsui Chem. Polyurethanes Inc.m, Chiba 299-0265 (JP); TSUTSUI, Tomoki,c/o Mitsui Chem. Polyurethanes Inc, Chiba 299-0265 (JP)
(74) Representative: Wytenburg, Wilhelmus Johannes
(86) International application number: PCT/JP2004/015946
(87) International publication number: WO 2005/040243

(57) **Abstract**

The present invention provides a flexible polyurethane foam showing sufficient physical properties and reduced volatile amine components. It is therefore possible to provide the flexible polyurethane foam, enabling to improve working environments during the production process and reduce volatile amines discharged from the products. The present invention also provides excellent seat pads and sound absorbing materials for automobiles, comprising the flexible polyurethane foam.

The flexible polyurethane foam is produced by contacting the polyol composition (A) comprising a polyether polyol (an amine value: 400 to 600 mg KOH/g, a hydroxyl value: 350 to 700 mg KOH/g), which is the adduct of an alkylene oxide to a compound selected from formulas (1) and (2), with an organic polyisocyanate in the presence of water.

In the formulae, R¹ and R² represent H or (CH)ₙ-NH₂ (n: 1-3), R³ - R⁶ and R⁷ represent H or an alkyl group or alkenyl group having 1 to 4 carbon atoms, and k and m represent 1 to 6.

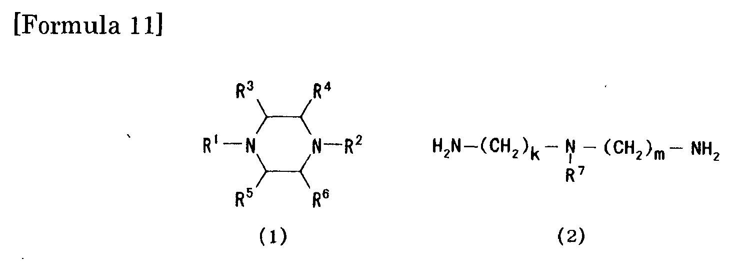

## Description

### Technical Field

The present invention relates to a flexible polyurethane foam and a seat pad and sound absorbing material comprising the flexible polyurethane foam. More particularly, the present invention relates to an excellent flexible polyurethane foam having satisfactory physical properties, which is obtainable a specific polyether polyol and at the same time can minimize volatile amine components, and a seat pad and sound absorbing material comprising the flexible polyurethane foam.

### Background Art

A polyurethane foam is produced by reacting a polyol with a polyisocyanate in the presence of a catalyst and, if necessary, a foaming agent, a surfactant, a crosslinking agent, etc. Heretofore, it has been known to employ various metal compounds or tertiary amine compounds as catalysts for production of such polyurethane resins. These catalysts are used alone or in combination in producing polyurethane resins in an industrial scale. Among these catalysts, tertiary amine compounds are particularly excellent in productivity and moldability and thus widely used as tertiary amine catalysts for producing polyurethane resins.

However, these tertiary amine catalysts described above generally have an objectionable odor and also have high volatility. For these reasons, various problems will be brought about during the foam production process. For example, volatile amines discharged from polyurethane foam products in the interior of an automobile create an odor problem. Furthermore, a so-called fogging problem has occurred in recent years that volatile components in a polyurethane foam deposit on a window glass of an automobile to cause fogging of the window glass thereby to reduce the commercial value. In addition to these problems, there is such a pollution problem that volatile amines discharged from polyurethane products will pollute other materials.

As a method for preventing the volatile amine catalysts as described above from volatilization from polyurethane foam products, it has been proposed to use a reactive amine catalyst having in its molecule a hydroxyl group which is capable of reacting with a polyisocyanate (JP 3,311,306). However, such catalysts were not satisfactory in view of improving the working environmental problem which would occur due to an odor generated from such amine catalysts during the process of producing polyurethane foams.

In order to solve the problems associated with volatile amine catalysts described above, processes for producing a flexible polyurethane foam using an autocatalytic polyol obtained by the addition of an alkylene oxide using as an initiator an amine compound having a specific structure have been proposed (WO 03/016372 and WO 03/029320). However, the processes disclosed in these publications fail to give any product having well-balanced effects of satisfactory physical properties, reactivity and reduction of volatile amine components.

[Patent Document 1]JP 3311306
[Patent Document 2]WO 03/016372
[Patent Document 3]WO 03/029320

### Disclosure of Invention

### Problems to be solved by the Invention

In order to solve the foregoing problems, the present inventors have made extensive studies in an attempt to provide a flexible polyurethane foam, which retains the physical properties and reactivity comparable to those using volatile amine catalysts and on the other hand, can reduce the amount of volatile amine catalysts used, and as a result, have attained the present invention.

An object of the present invention is to provide an excellent flexible polyurethane foam having sufficient physical properties and at the same time, reduced volatile amine components.

An object of the present invention is to provide a flexible polyurethane foam having an excellent balance in the of physical properties, reactivity and volatile amine reduction effect, which improves working environments during the flexible polyurethane foam production process and enables to reduce volatile amines discharged from flexible polyurethane foam products.

Another object of the present invention is to provide seat pads and sound absorbing materials for automobiles, etc. having excellent properties, which comprise the flexible polyurethane foam having the characteristics described above.

The present invention enables to provide seat pads and sound absorbing materials for automobiles, etc., comprising the flexible polyurethane foam having a volatile amine component of 200 ppm or less.

The present invention provides the flexible polyurethane foam to fulfill the objects described above, which can be produced by using a specific polyether polyol.

### Means for Solving the Problems

The flexible polyurethane foam of the present invention is a flexible polyurethane foam obtained by contacting a polyol composition (A) comprising a polyether polyol (polyol (D)) having an amine value of 400 to 600 mg KOH/g and a hydroxyl value of 350 to 700 mg KOH/g, which is produced by addition of an alkylene oxide to at least one amine compound selected from the amine compounds represented by formulas (1) and (2) below, with an organic polyisocyanate.

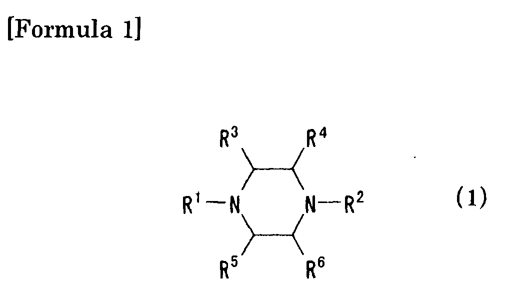

(wherein R¹ and R², which may be the same or different, each represents H or a group shown by -(CH)ₙ-NH₂ (wherein n is an integer of 1 to 3) and R³ - R⁶, which may be the same or different, each represents H or a straight or branched alkyl group or alkenyl group of 1 to 4 carbon atoms.)

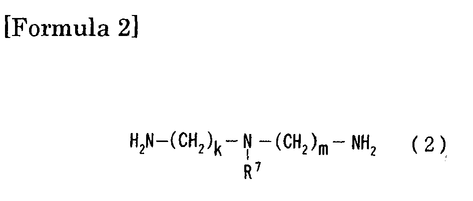

(wherein R⁷ represents a straight or branched alkyl group or alkenyl group of 1 to 4 carbon atoms, and k and m represent an integer of 1 to 6.)

A preferred embodiment of the polyol composition (A) described above includes a composition consisting of 0.5 to 3 parts by weight of the polyol (D), 0 to 99.5 parts by weight of the polyol (B) later described and 0 to 99.5 parts by weight of the polyol (C) later described, wherein (B), (C) and (D) are in such a ratio that the sum is 100 parts by weight.

### Advantages of Invention

According to the present invention, there can be provided a flexible polyurethane foam with minimized amount of volatile amine catalysts to be used, while maintaining the physical properties comparable to polyurethane foams produced using a volatile amine catalyst.
According to the present invention, there is provided a process for producing the flexible polyurethane foam with a reduced amount of volatile amine catalyst to be used, while maintaining the physical properties comparable to polyurethane foams produced using a volatile amine catalyst.
According to the present invention, there is further provided a flexible polyurethane foam suitable for use in seat pads and sound absorbing materials for automobiles, etc.

According to the present invention, there are provided seat pads and sound absorbing materials for automobiles, etc., comprising the flexible polyurethane foam with volatile amine components of 200 ppm or less.

### Best Embodiments for Carrying Out the Invention

The present invention provides a flexible polyurethane foam which is produced from the polyol composition (A) comprising a specific polyol and an organic polyisocyanate.

The flexible polyurethane foam of the present invention is advantageously available for use in seat pads and sound absorbing materials for automobiles, etc.

The present invention further provides such seat pads and sound absorbing materials, which are produced from the flexible polyurethane foam.

The flexible polyurethane foam of the present invention can be produced by contacting the polyol composition (A) comprising a polyether polyol (referred to as polyol (D)) having an amine value of 400 to 600 mg KOH/g and a hydroxyl value of 350 to 700 mg KOH/g, which is produced by addition of an alkylene oxide to at least one amine compound selected from the amine compounds represented by formulas (1) and (2) below, with an organic polyisocyanate in the presence of water as a foaming agent.

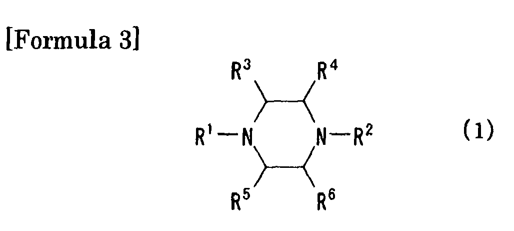

(wherein R¹ and R², which may be the same or different, each represents H or a group shown by -(CH)ₙ-NH₂ (wherein n is an integer of 1 to 3), R³ - R⁶, which may be the same or different, each represents H or a straight or branched alkyl group or alkenyl group of 1 to 4 carbon atoms).

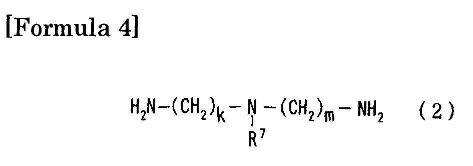

(wherein R⁷ represents a straight or branched alkyl group or alkenyl group of 1 to 4 carbon atoms, and k and m represent an integer of 1 to 6.)

Hereinafter, the present invention will be described in turn in detail, referring first to the polyol composition (A) of the present invention.
< Polyol composition (A) >
The polyol composition (A) of the present invention is the polyol composition (A) comprising the polyol (D) having an amine value of 400 to 600 mg KOH/g and a hydroxyl value of 350 to 700 mg KOH/g, which is produced by addition of an alkylene oxide to at least one amine compound selected from the amine compounds represented by formulas (1) and (2) below.

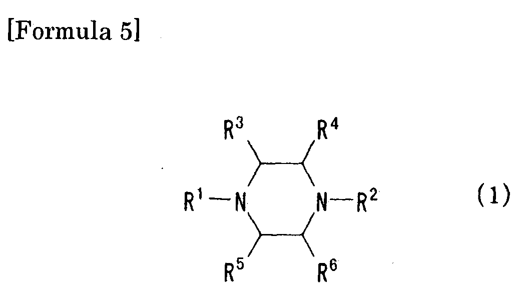

(wherein R¹ and R², which may be the same or different, each represents H or a group shown by -(CH)ₙ-NH₂ (wherein n is an integer of 1 to 3) and R³ - R⁶, which may be the same or different, each represents H or a straight or branched alkyl group or alkenyl group of 1 to 4 carbon atoms.)

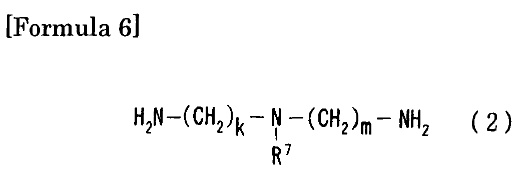

(wherein R⁷ represents a straight or branched alkyl group or alkenyl group of 1 to 4 carbon atoms, and k and m represent an integer of 1 to 6.)
The polyol composition (A) is the polyol composition comprising the polyol (D). Preferably, the polyol composition (A) is a composition containing the polyol (D) and other polyol components.

Preferred examples of the polyol composition containing the polyol (D) and other polyol components include the following:
That is, a preferred example of the polyol composition (A) is the composition (A) consisting of 0.5 to 3 parts by weight of the polyol (D) described above, 0 to 99.5 parts by weight of the polyol (B) described below and 0 to 99.5 parts by weight of the polyol (C) described below, provided that (B), (C) and (D) are in such a ratio that the sum is 100 parts by weight
Polyol (B): a polyether polyol having a hydroxyl value of 20 to 60 mg KOH/g and an average functional group number of 2 to 4.
Polyol (C): a polymer-dispersed polyol prepared by dispersing 5 to 50 wt% of a polymer obtained by polymerization of an ethylenic unsaturated monomer in a polyether polyol having a hydroxyl value of 20 to 60 mg KOH/g and an average functional group number of 2 to 4.

Polyol (D)
The polyol (D) of the present invention is a polyol obtained by adding an alkylene oxide to at least one amine compound selected from the amine compounds represented by formulas (1) and (2) described above to become an amine value of 400 to 600 mg KOH/g and a hydroxyl value of 350 to 700 mg KOH/g.

The amine compounds represented by formula (1) include 1-(2-aminoethyl)piperazine, 1-(3-aminopropyl)piperazine, 1,4-(bisaminopropyl)piperazine, piperazine, 2-methylpiperazine, cis-2,6-dimethylpiperazine and 2,5-dimethylpiperazine, preferably, 1-(2-aminoethyl)piperazine.

The amine compounds represented by formula (2) include methyliminobispropylamine and methyliminobisethylamine, preferably methyliminobispropylamine.

These amine compounds function as initiators. Since the theoretical amine value of methyliminobispropylamine is 1161 mg KOH/g and the theoretical amine value of 1-(2-aminoethyl)piperazine is 1177 mg KOH/g, preferred initiators have an amine value of 1150 to 1200 mg KOH/g.

Herein, the amine value is to express a molar concentration of amino groups per unit weight in the same unit as in the hydroxyl value defined by JIS K 1557 in units of the weight concentration of equivalent potassium hydroxide per unit weight (mg KOH/g)

As the amine compound in the polyol (D), at least one selected from methyliminobispropylamine and 1-(2-aminoethyl)piperazine is preferred in view of balance between an intensive activity on curability in producing flexible polyurethane foams and physical properties of the produced flexible polyurethane foams.

Preferably, the hydroxyl value of the polyol (D) is from 350 to 700 mg KOH/g. When the hydroxyl value is too low, it is likely that sufficient curability might not be obtained in the production of flexible polyurethane foams and in the case of a too high hydroxyl value, moldability might be worsened in the production of flexible polyurethane foams or a wet heat compression set ratio of the flexible polyurethane foam might be worsened.

As the alkylene oxide, which is added to the amine compound in producing the polyol (D), an alkylene oxide having 2 to 12 carbon atoms can be used. Specific examples include one or more members selected from ethylene oxide, propylene oxide, 1,2-butylene oxide, 2,3-butylene oxide, styrene oxide and tetrahydrofuran, preferably ethylene oxide and propylene oxide, and more preferably ethylene oxide.

Addition of the alkylene oxide is carried out generally in the absence of any catalyst but if necessary, catalysts such as an alkali metal hydroxide, e.g., sodium hydroxide, potassium hydroxide, etc. a basic compound such as a phosphazenium compound, a phosphazene compound, a phosphine oxide compound, etc. may be used in combination.

The phosphazenium compound includes compounds described in JPA 11-106500, such as
tetrakis[tris(dimethylamino)phosphoranilideneamino]phosphonium hydroxide, etc.

The phosphazene compound includes compounds described in JPA 10-36499, such as 1-tert-butyl-2,2,2-tris(dimethylamino)phosphazene, etc. The phosphine oxide compound includes compounds described in JPA 11-302371, such as
tris[tris(dimethylamino)phosphoralinideneamino]phosphine oxide, etc.

When a catalyst is used in combination, the quantity of the catalyst is preferably in the range of 0.1 to 10 mol%, based on active hydrogen in the amine compound. After addition of the alkylene oxide, the catalyst may or may not be removed.

An example of catalyst removal includes a method which involves adding 1 to 40 parts by weight of water to 100 parts by weight of crude polyether polyol, adding an acid in an amount sufficient to fully neutralize the basic catalyst in the crude polyether polyol to precipitate the neutralized salt, separating the catalyst through filtration and purifying. The acid used for neutralization includes inorganic acids such as phosphoric acid, phosphorous acid, hydrochloric acid, sulfuric acid, sulfurous acid, etc., or organic acids such as formic acid, oxalic acid, succinic acid, acetic acid, maleic acid, etc.

Another method of removing a catalyst includes a method which involves adsorbing and removing redundant acid or basic components using a synthetic inorganic adsorbent including magnesium silicate, aluminum silicate, etc. Specific examples of such adsorbents are various adsorbents including Tomix series such as Tomix AD-600 and Tomix AD-700 (all trade names, Tomita Pharmaceuticals Co., Ltd.), etc., KYOWAAD series such as KYOWAAD 400, KYOWAAD 500, KYOWAAD 600 and KYOWAAD 700 (Kyowa Chemical Industry Co., Ltd.), etc., Magnesol (Dallas, Inc.).
Also, the method for neutralization with an acid described above in combination with removal using a synthetic inorganic adsorbent may also be used, depending on necessity.

Addition polymerization of the alkylene oxide is carried out preferably under the conditions that the reaction temperature is 80 to 120°C and the maximum reaction pressure is not greater than 0.5 MPaG. When the addition polymerization is performed within such a temperature range, an industrially sufficient polymerization rate can be obtained.

In the addition polymerization of the alkylene oxide, the maximum pressure is advantageously 0.5 MPaG or lower. In general, the alkylene oxide is addition polymerized in an autoclave. The reaction of the alkylene oxide may be initiated under reduced pressure or atmospheric pressure. When the reaction is initiated under atmospheric pressure, it is advantageous to carry out the reaction in the presence of inert gas such as nitrogen, helium, etc.

Methods for supplying the alkylene oxide to the reaction system include a method for supplying a portion of the necessary amount of alkylene oxide in one batch and supplying the rest continuously, a method for supplying all of the alkylene oxide continuously, etc. The maximum pressure in an addition-polymerization reactor is affected depending on a supply rate of the alkylene oxide, a polymerization temperature, an amount of catalyst, etc. Preferably, the supply rate of the alkylene oxide is so controlled that the maximum pressure in an addition-polymerization reactor does not exceed 0.5 MPaG. When supply of the alkylene oxide is completed, the internal pressure inside the autoclave gradually decreases. It is preferred to continue addition polymerization until no change in the internal pressure is noted.

Polyol (B)
The polyol (B) of the present invention is a polyether polyol having a hydroxyl value of 20 to 60 mg KOH/g and an average functional group number of 2 to 4, and can be appropriately chosen from known polyols which meet the requirements for the polyol (B) of the present invention.

Polyether polyols suitable as the polyol (B) of the present invention include polyols obtained by addition-polymerizing the alkylene oxide in the presence of a catalyst using an active hydrogen compound as an initiator.

The active hydrogen compound used as an initiator is preferably an active hydrogen compound having active hydrogen atom on the oxygen atom or nitrogen atom. Specific examples of these preferred active hydrogen compounds are shown below.
(1) Active hydrogen compounds having active hydrogen atom on the oxygen atom
   The active hydrogen compounds include water, a carboxylic acid having 1 to 20 carbon atoms, a polyvalent carboxylic acid having 2 to 20 carbon atoms wherein 2 to 6 carboxyl groups are contained, a carbamic acid, an alcohol having 1 to 20 carbon atoms, a polyvalent alcohol having 2 to 20 carbon atoms wherein 2 to 8 hydroxyl groups are contained, sugar or its derivatives, an aromatic compound having 6 to 20 carbon atoms wherein 1 to 3 hydroxyl groups are contained, a polyalkylene oxide having 2 to 8 termini wherein 1 to 8 hydroxy groups are contained, etc.
(2) Active hydrogen compounds having active hydrogen atom on the nitrogen atom
   The active hydrogen compounds include an aliphatic or aromatic primary amine having 1 to 20 carbon atoms, an aliphatic or aromatic secondary amine having 2 to 20 carbon atoms, a polyvalent amine having 2 to 20 carbon atoms wherein 2 or 3 primary or secondary amino groups are contained, a saturated cyclic secondary amine having 4 to 20 carbon atoms, an unsaturated cyclic secondary amine having 4 to 20 carbon atoms, a cyclic polyvalent amine having 4 to 20 carbon atoms wherein 2 or 3 secondary amino groups are contained, an unsubstituted or N-mono-substituted acid amide having 2 to 20 carbon atoms, a 5- to 7-membered cyclic amide, a dicarboxylic imide having 4 to 10 carbon atoms, etc.

Of these active hydrogen compounds, preferred are water, an alcohol having 1 to 20 carbon atoms, a polyvalent alcohol having 2 to 20 carbon atoms wherein 2 to 8 hydroxyl groups are contained, a polyalkylene oxide with a molecular weight of 100 to 5,000 having 2 to 8 termini wherein 1 to 8 hydroxy groups are contained, an aliphatic or aromatic secondary amine having 2 to 20 carbon atoms, a polyvalent amine having 2 to 20 carbon atoms wherein 2 or 3 primary or secondary amino groups are contained, a saturated cyclic secondary amine having 4 to 20 carbon atoms, and a cyclic polyvalent amine having 4 to 20 carbon atoms wherein 2 or 3 secondary amino groups are contained.

More preferred compounds are water, a polyvalent alcohol having 2 to 10 carbon atoms wherein 2 to 4 hydroxyl groups are contained, a polyalkylene oxide with a molecular weight of 100 to 10,000 having 2 to 6 termini wherein 2 to 6 hydroxyl groups are contained, such as polyethylene oxide, polypropylene oxide or copolymers thereof, a polyvalent amine having 2 to 10 carbon atoms wherein 2 or 3 secondary amino groups are contained, a saturated cyclic secondary amine having 4 to 10 carbon atoms, and a cyclic polyvalent amine having 4 to 10 carbon atoms wherein 2 or 3 secondary amino groups are contained.

The average functional group number of the polyol (B) depends on an average functional group number of the active hydrogen compound used at the start and a monool by-produced during addition polymerization of the alkylene oxide, but is required to be within 2 to 4. Among the above-described compounds as the active hydrogen compounds, divalent, trivalent and tetravalent active hydrogen compounds are particularly preferred. Most preferred compounds are trivalent alcohols such as tetravalent alcohols such as ethylene glycol, diethylene glycol, propylene glycol, dipropylene glycol, etc., trivalent alcohols such as glycerin, trimethylolpropane, etc., tetravalent alcohols such as pentaerythritol, diglycerin, etc.

The polyol (B) can be produced by addition-polymerizing the alkylene oxide to the active hydrogen compound described above in the presence of a catalyst.
As the catalyst, there can be used a basic compound catalyst including an alkali metal compound catalyst, an alkaline earth metal compound catalyst, a P=N bond-containing compound catalyst, etc., a Lewis acid catalyst such as boron trifluoride etherate, etc., a double metal cyanide catalyst such as zinc hexacyanocobaltate, etc.

The alkylene oxides, which can be advantageously used, are those exemplified above. Ethylene oxide and propylene oxide are particularly preferred.

The addition polymerization of the alkylene oxide to the active hydrogen compound can be carried out under the conditions that the reaction temperature is 80 to 120°C and the maximum reaction pressure is not greater than 0.5 MPaG.
When the addition polymerization is carried out within such a temperature range, the industrially sufficient polymerization rate can be obtained and the total unsaturation degree does not increase, though such depends on the hydroxyl value of the polyether polyol. The maximum pressure for the addition polymerization of the alkylene oxide is preferably 0.5 MPaG or lower.

Usually, the addition polymerization of the alkylene oxide is carried out in an autoclave. The reaction of the alkylene oxide may be initiated under reduced pressure or atmospheric pressure. When the reaction is initiated under atmospheric pressure, it is advantageous to carry out the reaction in the presence of inert gas such as nitrogen, helium, etc.

In order to suppress the quantity of monools (total unsaturation degree) as by-products of the alkylene oxide, the maximum reaction pressure is more preferably 0.4 MPaG or lower and even more preferably 0.3 MPaG or lower.

Methods for supplying the alkylene oxide to the reaction system include a method for supplying a portion of the necessary amount of alkylene oxide in one batch and supplying the rest continuously, a method for supplying all of the alkylene oxide continuously, etc. The maximum pressure in an addition-polymerization reactor is affected depending on a supply rate of the alkylene oxide, a polymerization temperature, an amount of catalyst, etc. Preferably, the supply rate of the alkylene oxide is so controlled that the maximum pressure in an addition-polymerization reactor does not exceed 0.5 MPaG. When supply of the alkylene oxide is completed, the internal pressure inside the autoclave gradually decreases. It is preferred to continue addition polymerization until no change in the internal pressure is noted.

The content of oxyethylene group in the polyol (B) is within the range used for conventional flexible polyurethane foams and is 0 to 30 wt%, preferably 0 to 20 wt% and more preferably 0 to 17 wt%.

After addition polymerization of the alkylene oxide, it is preferred to neutralize or remove the catalyst in the crude polyol (B) obtained.
A preferred example of the method for neutralizing or removing a catalyst includes a method which involves neutralizing an acidic or basic catalyst with a base or acid in an amount sufficient to neutralize the catalyst to precipitate the neutralized salt, a method which involves thereafter further adsorbing redundant acid or base components with a synthetic inorganic adsorbent such as magnesium silicate, aluminum silicate, etc. The adsorbent can be appropriately chosen from the above-described adsorbents commercially available.

The catalyst can also be removed by a method which involves adding to 100 parts by weight of the crude polyol 1 to 200 parts by weight of water or a solvent mixture of water and a solvent inert to the polyol, for example, a solvent selected from hydrocarbon solvents such as toluene, hexanes, pentanes, heptanes, butanes, lower alcohols, cyclohexane, cyclopentane, xylenes, etc., separating, washing with water and removing water and the organic solvent under reduced pressure.

Furthermore, the catalyst can be removed by a method which involves adding 20 to 200 parts by weight of water to 100 parts by weight of the crude polyol, contacting the mixture with an ion exchange resin at 15 to 100°C, filtering to remove the ion exchange resin and dehydrating under reduced pressure.
By such purification, the amount of catalyst remained in the polyol of the present invention can be reduced to such an extent that the catalyst will not cause any trouble in producing flexible polyurethane foams.

In order to avoid any deterioration in the quality of the polyol during the purification, it is preferred to add an antioxidant thereto. Specific examples of the antioxidant include, 2,6-di-tert-butyl-p-cresol (BHT), pentaerythritol tetrakis[3-(3,5-di-tert-butyl-4-hydroxyphenyl)propionate, 4,4'-tetramethyl-diaminodiphenylmethane, phenothiazine, lecithin, zinc dialkyldithiophosphates, dilauryl thiopropionate, distearyl thiodipropionate, etc. but other known antioxidants can also be selected and provided for use.
It is desired that the antioxidant is used generally in an amount ranging 50 to 5000 ppm, preferably 100 to 4000 ppm and more preferably 300 to 2000 ppm, based on the amount of the crude polyol.

The polyol (B) of the present invention produced by the foregoing production process has a total unsaturation degree of preferably 0.040 meq./g or less, more preferably 0.030 meq./g or less and even more preferably 0.020 meq./g or less.

Polyol (C)
The polyol (C) is a polymer-dispersed polyol, in which 5 to 50 wt% of polymer (C-2) obtained by polymerization of an ethylenic unsaturated monomer is dispersed in a polyether polyol having a hydroxyl value of 20 to 60 mg KOH/g and an average functional group number of 2 to 4. Any polyol which satisfies the requirements for the polyol (C) can be appropriately chosen from conventionally known polymer-dispersed polyols and provided for use.

The polymer-dispersed polyol refers to a dispersion of vinyl polymer particles, which are obtained by dispersion-polymerizing a compound containing unsaturated bonds, as in a vinyl monomer such as acrylonitrile, styrene, etc., in the presence of a polyether polyol, using a radical initiator including an azo compound such as azobisisobutyronitrile, etc. or a peroxide compound such as benzoyl peroxide, etc. The vinyl polymer particles may be vinyl polymer particles composed of a polymer of the compound containing unsaturated bonds and preferably are those, in which at least a part of the compound containing unsaturated bonds is grafted to the polyol as a dispersion medium during the dispersion polymerization.

The compounds containing unsaturated bonds are compounds which contain unsaturated bonds in the molecule, for example, vinyl monomers such as acrylonitrile, styrene, acrylamide, etc. These compounds containing unsaturated bonds can be used alone or as admixture of two or more.

In producing the polymer-dispersed polyol, a dispersion stabilizer, a chain transfer agent and the like may also be used, in addition to the compounds containing unsaturated bonds.

In view of dispersion stability of vinyl polymer particles and preventing the viscosity of polymer-dispersed polyol from an excessive increase, it is preferred to set the concentration of the vinyl polymer particles within 5 to 50 parts by weight, preferably 10 to 50 parts by weight, based on 100 parts by weight of the polymer-dispersed polyol obtained by polymerization of vinyl monomers in the polyether polyol.

In the polyol (C) of the present invention obtained by the foregoing production process, the polyol (C-1) used preferably has a total unsaturation degree of 0.040 meq./g or less, more preferably 0.030 meq./g or less and even more preferably 0.020 meq./g or less, from the viewpoint of ensuring physical properties such as durability of the flexible polyurethane foams, or the like.

Where the total unsaturation degree of 50 wt% or more, preferably 75 wt% or more and even more preferably 100 wt% of the polyol based on 100 parts by weight of the polyol composition (A) is 0.040 meq./g or less, flexible polyurethane foams having preferable physical properties can be obtained and such an embodiment is a preferred embodiment for the present invention.

A composition consisting of 0 to 99.5 parts by weight of the polyol (B) described above and 0 to 99.5 parts by weight of the polyol (C) described above and 0.5 to 3 parts by weight of the polyol (D) described above, wherein (B), (C) and (D) are in such a ratio that the sum is 100 parts by weight, is a preferred example of the polyol composition (A) of the present invention.
Such polyol composition (A) is a polyol composition, which can be advantageously used for producing flexible polyurethane foams.

When the amount of the polyol (D) is within the range described above, good results of the present invention can be obtained. When the amount is too small, sufficient curability cannot be obtained in the production of flexible polyurethane foams, whereas when the amount is too large, moldability is deteriorated during the production of flexible polyurethane foams or a wet heat compression set ratio of the flexible polyurethane foams obtained is worsened.

Where the polymer-dispersed polyol or polyol (C) is used in producing the flexible polyurethane foam in accordance with the present invention, it is preferred that the content of polymer fine particles is 5 to 30 mass % and more preferably 5 to 20 mass %, when the sum of the polyether polyol and the polymer-dispersed polyol in the polyol composition (A) is made 100. Thus, interconnection between cells can be promoted to improve foam hardness.

<Organic isocyanate compound>
The organic isocyanate compound, which is reacted with the polyol in accordance with the present invention such as the polyether polyol described above, is not particularly limited but preferably used are conventionally known toluylene diisocyanates (an isomer ratio of 2,4-isomer or 2,6-isomer is not particularly limited but the ratio of 2,4-isomer/2,6-isomer having 80/20 is preferably employed), mixtures of toluylene diisocyanates and polymethylene polyphenyl polyisocyanates (e.g., Cosmonate M-200 manufactured by Mitsui Takeda Chemicals, Inc.), and the like.

In addition, mixtures of polyisocyanates, which are compositions containing polymethylene polyphenyl polyisocyanates, or their urethane-modified polyisocyanates and tolylene diisocyanates can also be preferably used.

Where the organic isocyanate compound is used as a mixture of the toluylene diisocyanate with other organic isocyanate compound, it is desired to contain the toluylene diisocyanate preferably in an amount of 50 to 100 mass %, more preferably 60 to 90 mass %, and particularly preferably 65 to 85 mass %. Preferably, the content of the toluylene diisocyanate is within the range described above, in terms of balanced durability and mechanical strength of foams. Such an organic isocyanate compound can be advantageously used in producing flexible polyurethane foams especially for automobile seat pads.

The number of isocyanate groups in such an organic isocyanate compound is expressed by the NCO index as the value obtained by dividing the total number of isocyanate groups by the total number of active hydrogens of the hydroxy groups in the polyol, the amino groups in crosslinking agents, etc. and water, which react with isocyanate groups. That is, where the number of the active hydrogens reacting with isocyanate groups is stoichiometrically equivalent to the isocyanate groups in the organic isocyanate compound, its NCO index becomes 1.0. In the flexible polyurethane foam in accordance with the present invention, it is desired that the NCO index is preferably in a range of 0.70 to 1.30 and more preferably 0.80 to 1.20.

<Foaming agent>
In the present invention, water is used as the foaming agent. The foaming agent is used preferably in an amount of 1.8 to 5.0 parts by mass and more preferably 2.0 to 4.5 parts by mass, based on 100 parts by mass of the polyol.

In addition to water, fluorinated hydrocarbons including chlorofluorocarbons which have been developed so as to protect the global environment, hydroxychlorofluorocarbons (HCFC-134a, etc.), etc., hydrocarbons (cyclopentane etc.), etc., carbon dioxide gas, liquefied carbon dioxide gas, and other foaming agents can be used as physical foaming agents, in combination with water.

<Flexible polyurethane foam>
Next, the flexible polyurethane foam of the present invention and a process for producing the same are described below.
The flexible polyurethane foam in accordance with the present invention can be produced by contacting at least the polyol composition (A) described above with the organic polyisocyanate in the presence of water as a foaming agent, if necessary, in combination with an auxiliary agent.

The conditions for the process of producing the flexible polyurethane foam in accordance with the present invention are not particularly limited, and any conventional known process can be appropriately applied thereto. Specifically, the process is applicable to any of the slabbing process, the hot cure mold process and the cold cure mold process.

The processes of producing the flexible polyurethane foam used as seat pads for automobiles are preferably the hot cure mold process and the cold cure mold process, and more preferably the cold cure mold process.

The flexible polyurethane foam of the present invention is produced by foaming the polyol (A), the organic isocyanate compound, a foaming gent and other components, if necessary. Examples of the other components include crosslinking agents, surfactants, catalysts, foam control agents and other additives (cell openers, flame retardants, pigments, ultraviolet absorbers, antioxidants, etc.), or the like.

It is preferred that the organic isocyanate compound and the polyol are mixed immediately before foaming.
Normally, the other components are previously mixed with the organic isocyanate compound or the polyol. These mixtures may be provided for use immediately after mixing, or may be stored and appropriately used in a necessary amount. In mixing these other components, combination of the mixing, mixing order, retention time after the mixing, etc. can be appropriately determined depending on necessities.

Of these mixtures, those obtained by mixing the polyol and the other components, namely, the polyol, a chemical foaming agent, a catalyst, etc. and if necessary, a crosslinking agent, a surfactant, a foam control agent and other additives, are sometimes referred to as resin premix.
These compositions can be appropriately set forth depending on the quality of flexible polyurethane foams required. In the cold cure mold process, a crosslinking agent is generally required as a necessary component.

This resin premix is reacted with the organic isocyanate compound. The viscosity of the resin premix used is preferably not more than 2500 mPa· s/25°C from the viewpoints of mixing properties in the foaming machine and moldability into a foam.

Mixing methods are not particularly limited and methods known heretofore can be used. For example, mixing may be performed by either dynamic mixing or static mixing or both in combination. The mixing method by dynamic mixing includes a mixing method using an agitator blade, etc. The mixing method by static mixing includes a method which involves mixing in a mixing chamber at the machine head of a foaming machine, a method which involves mixing in a conveying pipe using a static mixer, etc. Mixing immediately before foaming or mixing of gaseous components such as a physical foaming agent, etc. with liquid components is carried out under static mixing, whereas mixing of storable components with each other is carried out under dynamic mixing.

As the need arises, the mixing temperature and pressure can be optionally determined depending on the quality of objective flexible polyurethane foams and the kind or composition of raw materials.

For example, the polyol in accordance with the present invention, a foaming agent, a crosslinking agent, a foam control agent, a catalyst and other additives are previously mixed to prepare resin premix. The resin premix and the organic isocyanate compound are mixed in a given ratio and the mixture is injected into a mold, then reacted, foamed and cured to give the product of a given shape.

Next, the other components used when required to produce the flexible polyurethane foam in accordance with the present invention will be described.
(Foam control agent)
As the foam control agent used to produce the flexible polyurethane foam in accordance with the present invention, silicone-based foam control agents conventionally used, i.e., organic silicon-based surfactants can be used. Preferably used are, for example, SRX-274C, SF-2969, SF-2961, SF-2962, Y-10515 and SF-2971 (all tradenames) manufactured by Toray Dow Corning Silicone Co., Ltd., L-5309, L-3601, L-5307, L-3600, L-5366, SZ-1142 and SZ-1346 (all tradenames) manufactured by Nippon Unicar Co., Ltd., DC5164, DC5043, DC5169, DC2583 and DC2585 (all tradenames) manufactured by Air Products and Chemicals, Inc., B8719, B8724, B8727, B8715, B8726 and B4113 (all tradenames) manufactured by Gold Schmidt Inc., or the like. The amount of the silicone foam control agent used is 0.1 to 10 parts by mass, preferably 0.5 to 5 parts by mass, based on 100 parts by mass of the polyol.

(Catalyst)
In producing the flexible polyurethane foam in accordance with the present invention, a catalyst can be added. Known catalysts can be used as the catalyst and there is no particular limitation thereto. In addition to triethylenediamine, bis-(2-dimethylaminoethyl) ether, etc., the catalysts, which are preferably used, include reactive catalysts such as dimethylaminohexanol (Kaolizer No. 25) and Kaolizer P-200 (both tradenames) as manufactured by Kao Corporation, NE-200, NE-210, NE-500, NE-1060 and PC-17 (all tradenames) manufactured by Air Products and Chemicals, Inc., and the like.

These catalysts can be used alone or in combination of two or more kinds. The amount of the catalyst used is preferably 0.01 to 5 parts by mass, based on 100 parts by mass of the polyol, from the viewpoints of moldability of urethane foam and reduction of volatile components.

(Crosslinking agent)
In producing the cold-cure flexible polyurethane foam in accordance with the present invention, a crosslinking agent can be used. The hydroxyl value of the crosslinking agent is preferably 200 to 2000 mg KOH/g. Examples of such a crosslinking agent include an aliphatic polyvalent alcohol such as glycerin, etc.; an alkanolamine such as diethanolamine, triethanolamine, etc.

In addition, polyether polyols having the hydroxyl value of 200 to 1800 mg KOH/g can be used as crosslinking agents. Crosshnking agents which are hitherto known can also be used.

Where such a crosslinking agent is used, the agent is used preferably in an amount of 0.1 to 10 parts by mass, based on 100 parts by mass of the polyol composition (A).

(Additives)
In producing the flexible polyurethane foam in accordance with the present invention, the other additives can be used within such a range that does not impair the objects of the present invention. For example, in order to control the closed cell properties of the flexible polyurethane foam, EP-505S, MF-19, etc. manufactured by Mitsui Takeda Chemicals, Inc. can be used as a cell opener. When used, the cell opener is used preferably in a range of 0.1 to 5 parts by weight, based on 100 parts by weight of the polyol composition (A) described above.

<Applications>
The flexible polyurethane foam of the present invention is not particularly limited in applications but can be suitably used for cushion materials, sound-absorbing materials, etc. The flexible polyurethane foam of the present invention is a flexible polyurethane foam having excellent properties of reducing volatile amines discharged from the products and hence, achieves its characteristics more efficiently in applications to closed spaces such as the inside of a car or indoors. Of all others, the flexible polyurethane foam can be suitably used for seat cushions or seat pads for seat backs in automobiles.

As seat pads, those molded in a desired shape by the metal molding described above can be used, and by controlling conditions for molding, flexible polyurethane foams having physical properties suitable for the intended use of seat pads can be produced. For example, in seat pads for automobiles, the required physical properties are different between seat pads for seat cushions and seat pads for seat backs.

When the flexible polyurethane foam of the present invention is used as seat cushions for automobiles, it is preferred that the core density is 30 kg/m³ to 60 kg/ m³, the 25% ILD hardness is 150 to 300 N/314 cm² and the wet heat compression set ratio is not greater than 20%.

When the flexible polyurethane foam of the present invention is used as seat backs for automobiles, it is preferred that the core density is 20 kg/m³ to 45 kg/ m³, the 25% ILD hardness is 50 to 200 N/314cm² and the wet heat compression set ratio is not greater than 30%.
The volatile amine components in the flexible polyurethane foam of the present invention used in seat pads for automobiles are preferably 0 to 200 ppm.

The flexible polyurethane foam of the present invention can also be used as a sound-absorbing material. In the sound-absorbing material in which the flexible polyurethane foam of the present invention is used, the volatile amine components are preferably 0 to 200 ppm.

### EXAMPLES

Hereinafter, the embodiments of the present invention will be described in more detail, with reference to EXAMPLES of the present invention but the present invention is not deemed to these EXAMPLES.

The analysis and measurement in the present invention were carried out by the following methods.
(1) Hydroxyl value (OHV, unit: mg KOH/g) and total unsaturation degree (unit: meq./g) of the polyether polyol (hereinafter referred to as the polyol)
   The OHV was measured by the method described in JIS K-1557.
(2) Amine values (unit: mg KOH/g) of the initiator and polyether polyol
   A sample was weighed in a 100 ml beaker, dissolved in 60 ml of glacial acetic acid (acetic acid for non-aqueous titration) and titrated with a perchloric acid-acetic acid solution having a concentration of, e.g., N/10 to figure out the neutralizing point, followed by calculation according to the formula: the amine value (mg KOH/g) = 56.1 x v x f x 0.1/S. The value used was a mean value of two measurements.

In the formula, v, f and S represent the following:
v: amount (ml) of the N/10 perchloric acid-acetic acid solution required for the titration
f: titer (factor) of the N/10 perchloric acid-acetic acid solution required for the titration
S: amount (g) of the sample

(3) Foam physical properties
The measurement was performed in accordance with the following standard.
Foam density: the measurement was made in accordance with the description of JIS K-6400.
The density means an apparent density defined by JIS.
The measurement was carried out using a rectangular parallelepiped foam sample prepared by cutting off surface skin, or cutting out of the molded foam.

Rate of reduction of volatile catalysts: In the amine-based catalysts, the weight of volatile amine compounds is expressed as percentage, based on the amount in the composition for control.

Closed cell properties: The closed cell properties of the molded flexible polyurethane foams were measured by the sense of touch. In the order of weakness of the closed cell properties, they were expressed as SN, S, SM, M, L and 2L.

Curability: A polyurethane stock solution, in which a mixture of the resin premix with an isocyanate started a reaction, was poured into an aluminum mold, covered and caused to foam. Six minutes after start of the reaction, curability of the portion (burr) protruded from the mold was assessed by the sense of touch. The results of assessment were expressed by the following criteria.
- ○ (open circle):: sufficiently cured state
- △ (open triangle):: state with some tackiness
- ×:: insufficiently cured state

Foam hardness: The measurement was made in accordance with the description of JIS K-6400.
A sample used was the same sample as used in the foam density measurement described above. A foam having a thickness of 94 mm to 100 mm was used as a sample. After storing the sample for 24 hours in a chamber kept under a relative humidity of 50%, the measurement was conducted at 23°C.

Impact resilience: The measurement was made in accordance with the description of JIS K-6400. The measurement results at the core portion of the foam are shown.
Elongation and tearing strength: The measurement was made in accordance with the description of JIS K-6400.

Wet heat compression set ratio: The measurement was made in accordance with the description of JIS K-6400. In the measurement, the core portion of the molded flexible foam was cut out to give a test specimen having a size of 50 x 50 x 25 mm, which was used as a test specimen. The test specimen was compressed to reduce its thickness to 50%, inserted between parallel flat plates and allowed to stand for 22 hours under the conditions of a temperature of 50°C and a relative humidity of 95%. Then, the specimen was taken out. After 30 minutes, the thickness of the specimen was measured. The measured thickness was compared with the thickness before the test to determine a set ratio.

Method for measurement of sound absorption performance of the polyurethane foam: The sound absorption performance was measured by the two-microphone method according to ISO10534-2. For the measurement, an impedance tube having an inner diameter of 29 mm was used. A sample to be measured was settled for 24 hours in a chamber kept at 23°C under a relative humidity of 50% and then used. A device for the measurement of sound absorption coefficient was used at 23°C in an atmosphere under a relative humidity of 50%. In the sound absorption coefficient obtained by these measurements, a higher value shows more excellent sound absorption performance.

(4) Measurement of volatile amine components
A flexible polyurethane foam was freely foamed in a polyethylene bag. While storing in a sealed state, the bag was allowed to stand for 24 hours and then provided for thermal extraction of volatile amine components.
A sample cut out of the specimen foam was heated under a helium gas purge. The volatile amine components desorbed was collected in a cold trap. The trapped components were identified and quantified by GC-MS and shown as the volatile amine components per foam unit weight.

Sampling: The central portion of the specimen foam was cut out and weighed.
Analysis equipment: Thermal Desorption System TDS2/TDSA/CIS4 (manufactured by Gerstel K. K.)
GC-MS: HP6890/HP5973 (manufactured by Hewlett Packard) Conditions for thermal desorption:
Thermal extraction - The temperature was elevated from 20°C to 120°C at a rate of 60°C/min. and kept for 15 minutes.
Trapping temperature - The volatile components, which were cooled to -120°C and extracted by helium gas purge, were trapped. After the temperature was elevated to 210°C at a rate of 12°C/sec., the trapped components were applied to GC-MS.
Conditions for GC-MS analysis:
Column: CAM (0.25 mm x 30 m, 0.25 µm in thickness)
Temperature rise conditions: The temperature was elevated from 50°C to 210°C at a rate of 20°C/min.

Injection mode: splits (50/1)
Helium purge: 1.5 ml/min.
Monitoring mode: SIM

Raw materials used to produce flexible polyurethane foams are shown below.
Polyol A: Polyol having an OHV of 34 mg KOH/g and a total unsaturation degree of 0.062 meq./g, produced by adding propylene oxide (hereinafter abbreviated as PO) to pentaerythritol in the presence of KOH catalyst, followed by ethylene oxide (hereinafter abbreviated as EO) capping (14 wt%).
Polyol B: Polymer-dispersed polyol having a polymer content of 20 wt% and an OHV of 28 mg KOH/g, which was produced by polymerizing AN in the polyol having an OHV of 34 mg KOH/g and a total unsaturation degree of 0.059 meq./g produced by adding PO to glycerin in the presence of KOH catalyst and then capping with EO (15 wt%), in the presence of azobisisobutyronitrile.
Polyol C: Polyol having an OHV of 35 mg KOH/g and a total unsaturation degree of 0.018 meq./g, produced by adding PO to glycerin in the presence of CsOH catalyst, followed by EO capping (15 wt%).
Polyol D: Polymer-dispersed polyol having a polymer content of 20 wt% and an OHV of 28 mg KOH/g, which was produced by polymerizing AN/St (80/20 in a weight ratio) in the polyol having an OHV of 35 mg KOH/g and a total unsaturation degree of 0.018 meq./g produced by adding PO to glycerin in the presence of CsOH catalyst and then capping with EO (15 wt%), in the presence of azobisisobutyronitrile.
Polyol E: Polyol having an OHV of 560 mg KOH/g and an amine value of 420 mg KOH/g, produced by adding EO to methyliminobispropylamine (MIBPA).
Polyol F: Polyol having an OHV of 580 mg KOH/g and an amine value of 435 mg KOH/g, produced by adding PO to MIBPA.
Polyol G: Polyol having an OHV of 550 mg KOH/g and an amine value of 550 mg KOH/g, produced by adding EO to 1-(2-aminoethyl)piperazine.
Polyol H: Polyol having an OHV of 755 mg KOH/g and an amine value of 380 mg KOH/g, produced by adding PO to ethylenediamine.
Polyol I: Polyol having an OHV of 755 mg KOH/g and an amine value of 380 mg KOH/g, produced by adding PO to ethylenediamine, followed by EO capping (43 wt%).
Polyol J: Polyol having an OHV of 34 mg KOH/g and an amine value of 26 mg KOH/g, produced by adding PO to MIBPA in the presence of KOH catalyst, followed by EO capping (15 wt%).
Polyol K: Polyol having an OHV of 34 mg KOH/g and an amine value of 34 mg KOH/g, produced by adding PO to 1-(2-aminoethyl)piperazine, followed by EO capping (12 wt%).
Polyol L: Polyol having an OHV of 45 mg KOH/g and a total unsaturation degree of 0.028 meq./g, produced by adding PO to pentaerythritol in the presence of KOH catalyst, followed by EO capping (15 wt%).

Cell opener A: Cell opener having an OHV of 52 mg KOH/g, produced by adding propylene oxide (25 wt%) and ethylene oxide to glycerin in the presence of KOH catalyst.
Cell opener B: Cell opener having an OHV of 110 mg KOH/g, produced by adding ethylene oxide to dipropylene glycol in the presence of KOH catalyst.

Crosslinking agent A: Crosslinking agent having an OHV of 600 mg KOH/g, produced by adding ethylene oxide to pentaerythritol.
Crosslinking agent B: Crosslinking agent having an OHV of 850 mg KOH/g, produced by mixing crosslinking agent A with diethanolamine.
Crosslinking agent C: Glycerin
Water: Distilled water

Amine catalyst A: 33 wt% dipropylene glycol solution of triethylenediamine, the product from Katsuzai Chemical Corp.
Amine catalyst B: 70% triethylenediamine solution of bis(2-dimethylaminoethyl) ether, the product from Crompton Corp.
Amine catalyst C: Kaolizer No. 25 (dimethylaminohexanol), the product from Kao Corporation.

Foam control agent A: L-5309. A silicone foam control agent, the product from Nippon Unicar Co., Ltd.
Foam control agent B: L-3601. A silicone foam control agent, the product from Nippon Unicar Co., Ltd.
Foam control agent C: SF-2971. A silicone foam control agent, the product from Toray Dow Corning Toray Silicone Co., Ltd.
Organic isocyanate compound A: Cosmonate M-20, the product from Mitsui Takeda Chemicals, Inc., which is a mixture of 80 parts of a mixed 2,4-toluylene diisocyanate and 2,6-toluylene diisocyanate in a mass ratio of 80:20, and 20 parts of polymethylene polyphenyl polyisocyanate

### (EXAMPLES 1 to 10 and COMPARATIVE EXAMPLES 1 to 9)

Resin premix solutions were prepared by mixing the respective components in the cold cure flexible polyurethane foam compositions having an overall density of 50 kg/m³ shown in TABLE 1, the cold cure flexible polyurethane foam compositions having an overall density of 50 kg/m³ shown in TABLE 1, the cold cure flexible polyurethane foam compositions having an overall density of 40 kg/m³ shown in TABLE 2, the cold cure flexible polyurethane foam compositions having an overall density of 30 kg/m³ shown in TABLE 3 and the cold cure flexible polyurethane foam compositions having an overall density of 110 kg/m³ shown in TABLE 4. TABLES 1 through 3 show compositions for seat pads and TABLE 4 shows compositions for sound-absorbing materials, wherein unit is part by weight (hereinafter the same).

In order to control foams to such an extent that the foams will not collapse in releasing urethane foams from molds and crushing them, foam control agents A, B and C were prepared and used as the foam control agents.

The resin premix solution described above and the organic isocyanate compound A equivalent to the NCO index of 1.00 were previously adjusted to 23°C. The resin solution and the organic isocyanate compound A were mixed for 6 seconds. The mixture was immediately injected into a mold having inner measurements of 400 x 400 x 100 mm, which temperature had been previously adjusted to 65°C, and the lid was closed to allow to foam in the mold. While keeping the mold temperature at 65°C, the mixture was subjected to heat curing for 6 minutes. The flexible polyurethane foam was then taken out of the mold followed by crushing. Physical properties of the cold cure flexible polyurethane foam are shown in TABLES 1 to 4.

[Table 1]

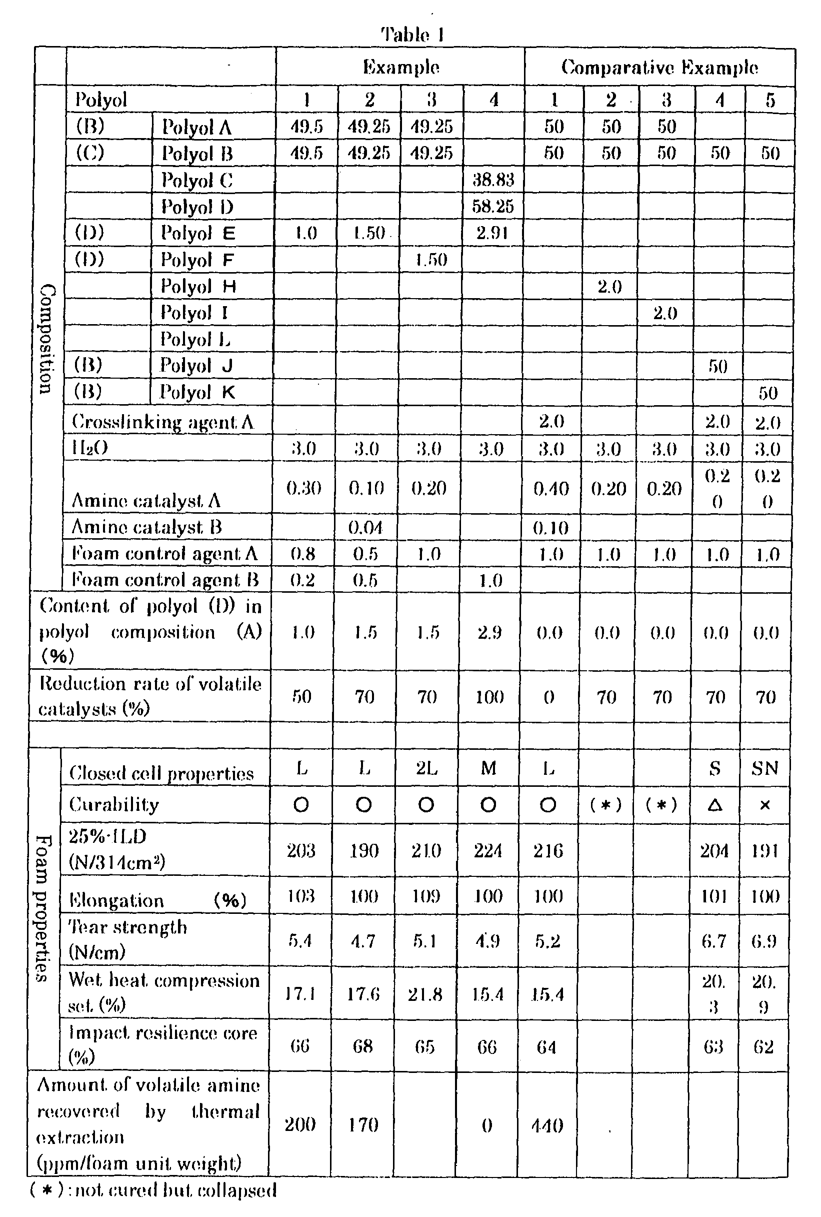

[Table 2]

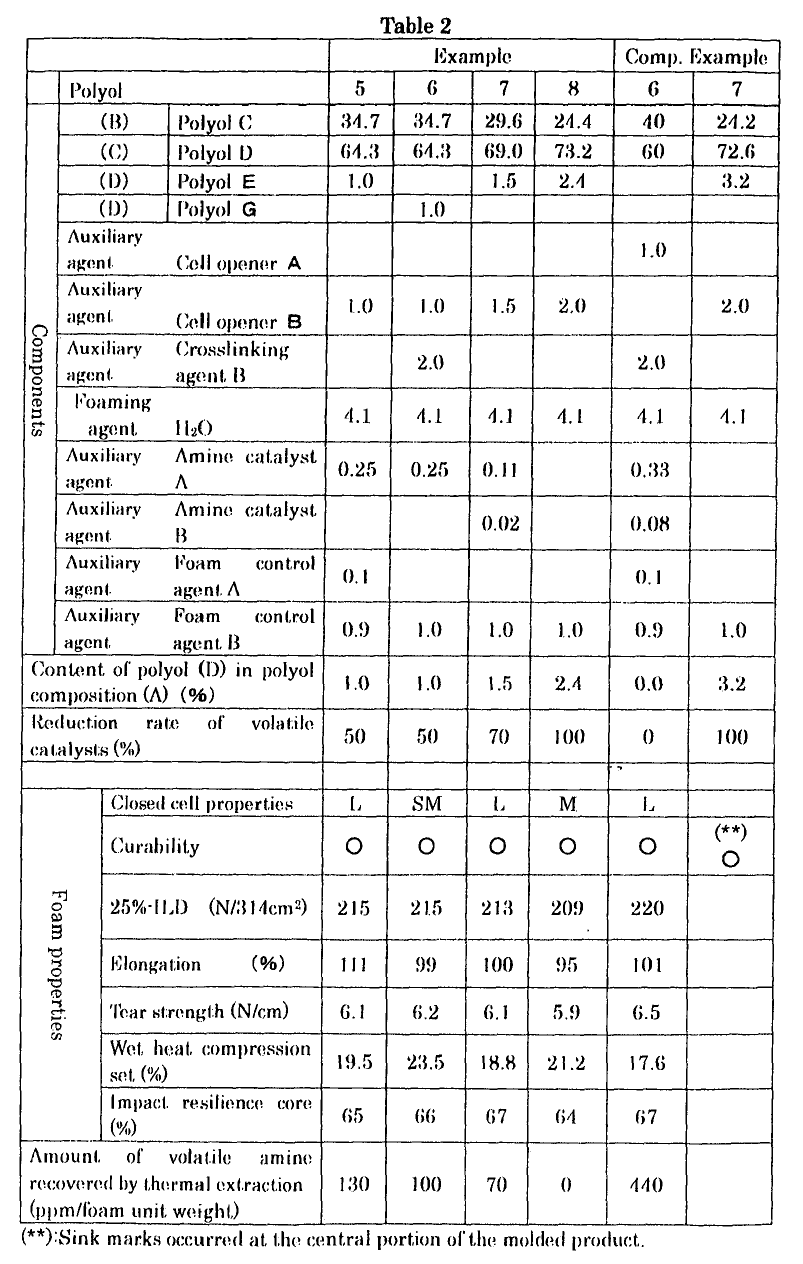

[Table 3]

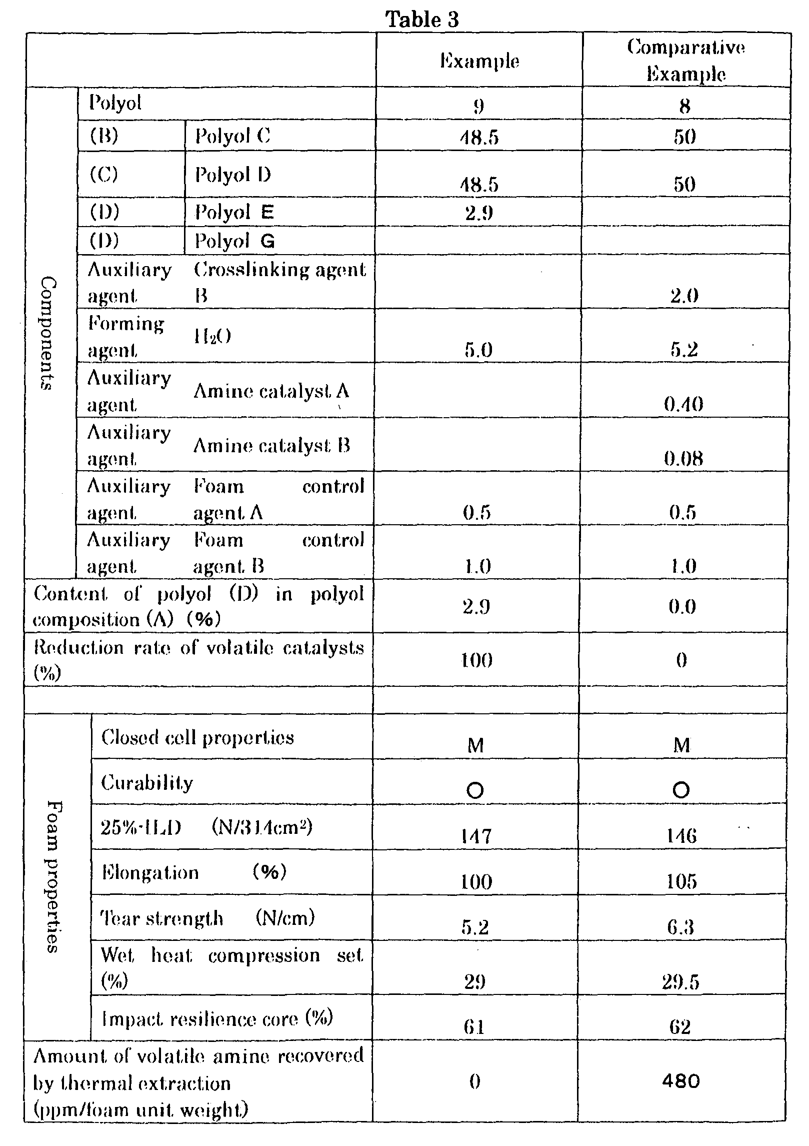

[Table 4]

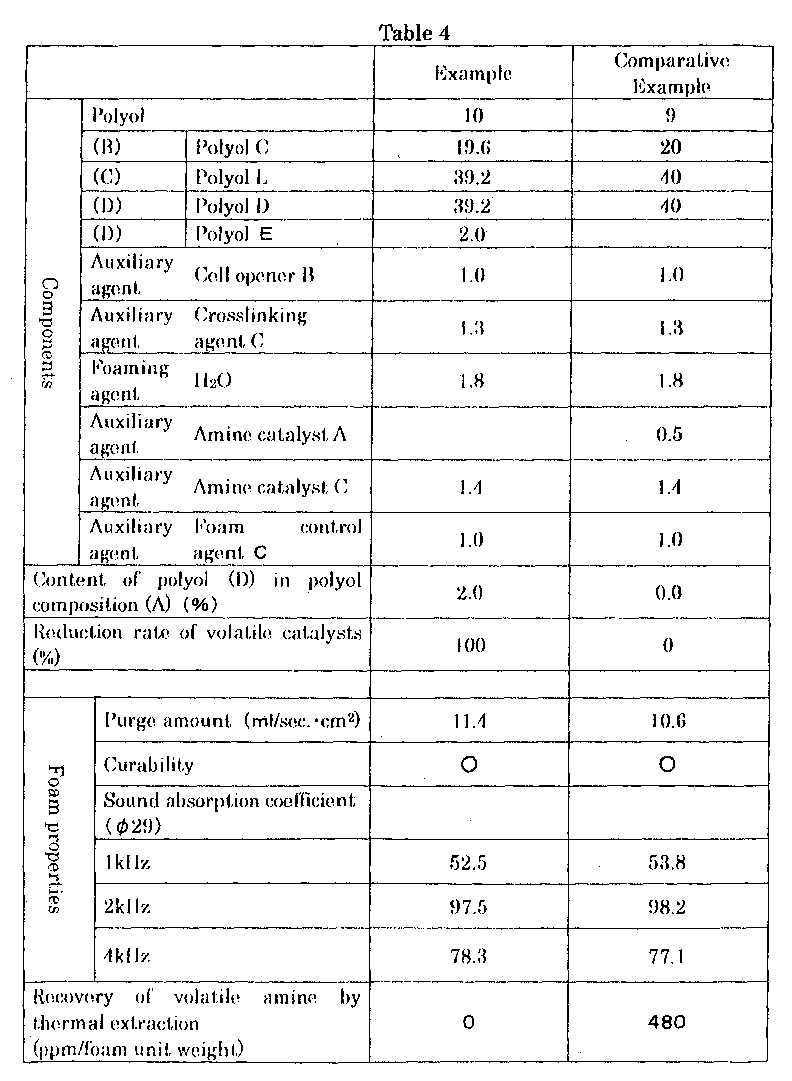

### <Comments on EXAMPLES>

Comparison of EXAMPLES 1 through 10 and COMPARATIVE EXAMPLES 1 through 9 reveals that when 0.5 to 3 parts by weight of the polyol (D) of the present invention is used in the polyol composition (A), the amount of volatile amine catalyst used can be reduced by 50 to 100%, while maintaining the curability and foam physical properties comparable to COMPARATIVE EXAMPLES 1, 6, 8 AND 9 as control compositions using volatile amine catalysts.

Particularly in EXAMPLE 4 in which the total unsaturation degree of the polyol (B) and the polyol (C) is low, the product exhibits almost the same durability (wet heat compression set) as in COMPARATIVE EXAMPLE 1 and, in EXAMPLE 10 the product shows a sound absorption coefficient fairly comparable to COMPARATIVE EXAMPLE 9, in spite that any volatile amine catalyst was not used at all, which reveals the effects of the polyol with a low unsaturation degree in the present invention.

When more than 3 parts by weight of the polyol (D) is used in the polyol composition (A), it is found that sink marks occurred at the central portion of the molded product, whereby satisfactory moldability cannot be obtained (COMPARATIVE EXAMPLE 7). It is also found that even when polyols (Polyols H and I) using as initiators the amine compounds having different structures from the polyol (D) of the present invention are used in a nearly equal amount to the polyol (D) of the present invention, the curability is vastly inferior (COMPARATIVE EXAMPLES 2 and 3).

It is further noted that sufficient curability cannot be obtained even with the polyol using as an initiator the amine compound having the same structure as that of the polyol (D) of the present invention or even when using Polyol (B) in place of the polyols (Polyols J and K) having their hydroxy values outside the range for the polyol (D) of the present invention (COMPARATIVE EXAMPLES 4 and 5).

Furthermore, it is understood that the amounts of volatile amine components recovered by thermal extraction are 400 ppm or more in COMPARATIVE EXAMPLES 1, 6, 8 and 9, whereas in EXAMPLES the amounts are reduced within the range of 0 to 200 ppm.

### INDUSTRIAL APPLICABILITY

According to the present invention, there are provided flexible polyurethane foams, which can reduce the amount of volatile amine catalyst used and improve working environments during the flexible polyurethane foam production process and thus enable to reduce volatile amines discharged from flexible polyurethane foam products.

The flexible polyurethane foams obtained by the present invention are applicable to a wide variety of fields including seat pads and sound absorbing materials for automobiles.

In the field of sound absorption for automobiles, the flexible polyurethane foams of the present invention are used for, e.g., dash silencers, floor mats, engine rooms, ceiling materials, trunk rooms, etc., especially advantageously used for dash silencers.

## Claims

1. A flexible polyurethane foam obtained by contacting a polyol composition (A) comprising a polyether polyol (polyol (D)) having an amine value of 400 to 600 mg KOH/g and a hydroxyl value of 350 to 700 mg KOH/g, which is produced by addition of an alkylene oxide to at least one amine compound selected from the amine compounds represented by formulas (1) and (2) below, with an organic polyisocyanate. 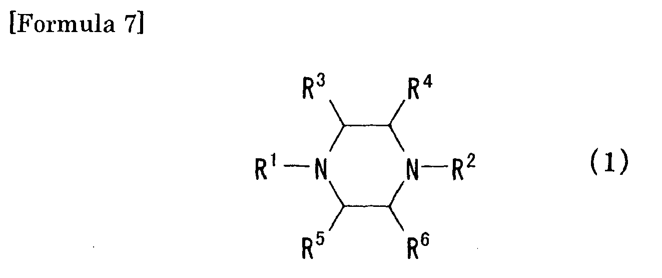 (wherein R¹ and R², which may be the same or different, each represents H or a group shown by -(CH)ₙ-NH₂ (wherein n is an integer of 1 to 3) and R³ - R⁶, which may be the same or different, each represents H or a straight or branched alkyl group or alkenyl group of 1 to 4 carbon atoms.) 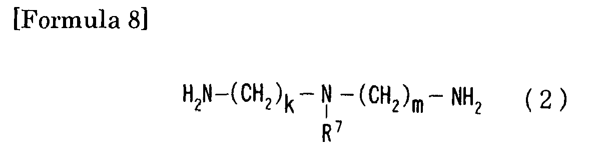 (wherein R⁷ represents a straight or branched alkyl group or alkenyl group of 1 to 4 carbon atoms, and k and m represent an integer of 1 to 6.)

2. The flexible polyurethane foam according to claim 1, wherein the polyol composition (A) is a polyol composition consisting of 0.5 to 3 parts by weight of the polyol (D), 0 to 99.5 parts by weight of the polyol (B) defined below and 0 to 99.5 parts by weight of the polyol (C) defined below (provided that (B), (C) and (D) are in such a ratio that the sum is 100 parts by weight).
Polyol (B): a polyether polyol having a hydroxyl value of 20 to 60 mg KOH/g and an average functional group number of 2 to 4.
Polyol (C): a polymer-dispersed polyol which comprises dispersing 5 to 50 wt% of a polymer (C-2) obtained by polymerization of an ethylenic unsaturated monomer in a polyether polyol (C-1) having a hydroxyl value of 20 to 60 mg KOH/g and an average functional group number of 2 to 4.

3. The flexible polyurethane foam according to claim 1 or 2, wherein the amino compound represented by (1) above is 1-(2-aminoethyl)piperazine and the amino compound represented by (2) above is methyliminobispropylamine.

4. A polyol composition comprising 0 to 99.5 parts by weight of a polyol (B) having a hydroxyl value of 20 to 60 mg KOH/g and an average functional group number of 2 to 4, 0 to 99.5 parts by weight of a polyol (C), which is a polymer-dispersed polyol which comprises dispersing 5 to 50 wt% of a polymer (C-2) obtained by polymerization of an ethylenic unsaturated monomer in a polyether polyol (C-1) having a hydroxyl value of 20 to 60 mg KOH/g and an average functional group number of 2 to 4, and 0.5 to 3 parts by weight of a polyol (D), which is a polyether polyol having an amine value of 400 to 600 mg KOH/g and a hydroxyl value of 350 to 700 mg KOH/g, produced by addition of an alkylene oxide to at least one amine compound selected from the amine compounds represented by formulas (1) and (2) below, wherein (B), (C) and (D) are in such a ratio that the sum is 100 parts by weight. 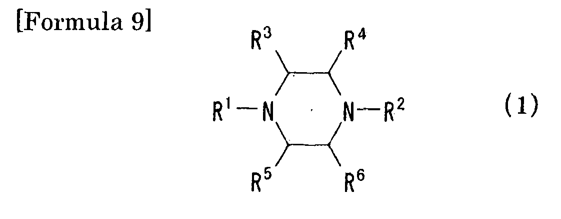 (wherein R¹ and R², which may be the same or different, each represents H or a group shown by -(CH)ₙ-NH₂ (wherein n is an integer of 1 to 3) and R³ - R⁶, which may be the same or different, each represents H or a straight or branched alkyl group or alkenyl group of 1 to 4 carbon atoms.) 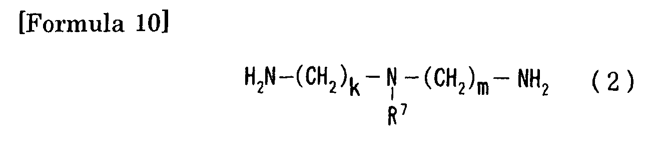 (wherein R⁷ represents a straight or branched alkyl group or alkenyl group of 1 to 4 carbon atoms, and k and m represent an integer of 1 to 6.)

5. A seat pad for automobile comprising the flexible polyurethane foam according to any one of claims 1 through 3.

6. The seat pad for automobile according to claim 5, wherein a core density of the seat pad is 30 kg/m³ to 60 kg/ m³, a 25% ILD hardness is 150 to 300 N/314 cm² and a wet heat compression set ratio is not greater than 20%.

7. The seat pad for automobile according to claim 5, wherein the core density of the seat pad is 20 kg/m³ to 45 kg/m³, the 25% ILD hardness is 50 to 200 N/314 cm² and the wet heat compression set ratio is not greater than 30%.

8. The seat pad for automobile according to any one of claims 5 through 7, wherein volatile amine components in the seat pad are 0 to 200 ppm.

9. A sound absorbing material comprising the flexible polyurethane foam according to any one of claims 1 through 3.

10. The sound absorbing material according to claim 9, wherein volatile amine components in the sound absorbing material are 0 to 200 ppm.
